# EUROPEAN PATENT APPLICATION

(11) **EP 1 345 120 A2**
(43) Date of publication of application: **17.09.2003**
(21) Application number: 03003669.3
(22) Date of filing: 18.02.2003
(51) Int. Cl.: G06F 9/50, G06F 11/34

(54) **Method and apparatus for distributed processing control**

(30) Priority: 14.03.2002 JP 2002071001
(71) Applicant: Fuji Photo Film Co., Ltd., Kanagawa (JP)
(72) Inventor: Katayama, Takeshi, Ashigarakami-gun, Kanagawa (JP)
(74) Representative: Klunker . Schmitt-Nilson . Hirsch

(57) **Abstract**

A distributed processing control apparatus for determining processing performed by a plurality of processors, which performs a processing to a plurality of sets of data, in order to process the plurality of sets of data, including a processing performance evaluation unit for evaluating processing performance value of each of the plurality of processors when the processing is generated; and a distribution rate determination unit for determining a distribution rate of a processing load of each of the plurality of processors for processing the plurality of sets of data based on the results of evaluation by the processing performance evaluation unit.

## Description

This patent application claims priority from a Japanese patent application No. 2002-071001 filed on March 14 2002, the contents of which are incorporated herein by reference.

### BACKGROUND OF THE INVENTION

### Field of the Invention

The present invention relates to a distributed processing control apparatus, a distributed processing system, a computer readable medium storing program for a distributed processing control, and a distributed processing control method. More particularly, the present invention relates to a distributed processing control apparatus, a distributed processing system, a distributed processing control program, and a distributed processing control method for distributing processing of a plurality of image data to a plurality of processing equipment.

### Description of Related Art

A Japanese patent application publication No. 08-9142 discloses a device and a method for controlling image processor and data processor for processing images using a plurality of image processing apparatuses. In the Japanese patent application publication No. 08-9142, it is described that when image data is transferred between the two image processing apparatuses, processing performance of the two image processing apparatus are compared in advance and an image processing apparatus with high processing performance is selected for processing the image data.

However, since an image processing apparatus performs various processing other than the image processing, processing load of the apparatus is not stable but fluctuated with passage of time. The conventional image processing apparatus is not able to respond to such the processing load fluctuation. Furthermore, the conventional image processing apparatus does not take the time for transferring the image data into consideration. Therefore, even if time for the image processing without transferring the image data is shorter than time for the processing and transferring the image data, the conventional image processing apparatus likely transmits the image data.

### SUMMARY OF THE INVENTION

Therefore, it is an object of the present invention to provide a distributed processing control apparatus, a distributed processing system, a computer readable medium storing program for a distributed processing control, and a distributed processing control method which can solve the foregoing problems. The above and other objects can be achieved by combinations described in the independent claims. The dependent claims define further advantageous and exemplary combinations of the present invention.

According to the first aspect of the present invention, there is provided a distributed processing control apparatus for determining processing performed by a plurality of processors, which performs a processing to a plurality of sets of data, in order to process the plurality of sets of data. The distributed processing control apparatus includes: a processing performance evaluation unit for evaluating processing performance value of each of the plurality of processors when the processing is generated; and a distribution rate determination unit for determining a distribution rate of a processing load of each of the plurality of processors for processing the plurality of sets of data based on the results of evaluation by the processing performance evaluation unit. It is preferable that one of the plurality of processors includes the distributed processing control apparatus. The plurality of sets of data may be a plurality of image data.

It is preferable that the plurality of processors include:
a first processor for storing a plurality of image data as the plurality of sets of data and a second processor for displaying the plurality of image data; the processing performance evaluation unit evaluates processing performance value of the first processor and the second processor, and image display performance of the second processor when the processing is generated; and the distribution rate determination unit determines the distribution rate of the processing load of each of the first processor and
the second processor for processing the plurality of image data based on the results of the evaluation by the processing performance evaluation unit. It is also preferable that the processing performance evaluation unit performs the evaluation when the first processor transmits the image data. The processing performance evaluation unit may perform the evaluation when the second processor requests the image data. It is also preferable that the distribution rate determination unit determines whether to choose the first processor or the second processor for processing the image data in accordance with the image display performance of the second processor based on the result of the evaluation.

It is preferable that the plurality of processors includes a third processor for communicating with at least one of the first processor and the second processor. The processing performance evaluation unit evaluates the processing performance value of each of the plurality of processors including the third processor, and the image display performances of the second processor when the processing is generated, and the distribution rate determination unit determines whether to choose the first processor, the second processor, or the third processor for processing the image data in accordance with the image display performance of the second processor based on the result of the evaluation.

The distribution rate determination unit may include a history of processing, and computes a time zone in which processing load of the first processor is expected to be higher than a predetermined value, by using statistics of the history of the processing. It is preferable that the processing performance evaluation unit evaluates communication performance value between the plurality of processors, and the distribution rate determination unit determines the distribution rate in accordance with the communication performance value. The distribution rate determination unit may recognize data size of the plurality of processed data, and may determine the distribution rate based on the size of the processed data. It is also preferable that the distributed processing control apparatus further includes: a program transmitting unit for transmitting a program for the processing to the processor which performs the processing; and the distribution rate determination unit determines the distribution rate further based on a communication load for transmitting the program.

According to the second aspect of the present invention, there is provided a distributed processing system for distributing and processing a plurality of sets of data. The distributed processing system includes: a plurality of processors for performing a processing to the plurality of sets of data; a processing performance evaluation unit for evaluating processing performance value of each of the plurality of processors when the processing is generated; and a distribution rate determination unit for determining a distribution rate of a processing load of each of the plurality of processors for processing the plurality of sets of data based on the result of evaluation by the processing performance evaluation unit.

According to the third aspect of the present invention, there is provided a computer readable medium storing thereon a program for determining processing performed by a plurality of processors, which performs a processing to a plurality of sets of data, in order to process the plurality of sets of data. The program includes: a processing performance evaluation module for evaluating processing performance value of each of the plurality of processors when the processing is generated; and a distribution rate determination module for determining a distribution rate of a processing load of each of the plurality of processors for processing the plurality of sets of data based on the results of evaluation by the processing performance evaluation module.

According to the fourth aspect of the present invention, there is provided a distributed processing control method for determining processing performed by a plurality of processors, which performs a processing to a plurality of sets of data, in order to process the plurality of sets of data. The distributed processing control method includes : steps of evaluating processing performance value of each of the plurality of processors when the processing is generated; and determining a distribution rate of a processing load of each of the plurality of processors for processing the plurality of sets of data based on the results of evaluation in the processing performance evaluation step.

According to the fifth aspect of the present invention, there is provided a distributed processing system for performing a processing on a plurality of sets of data, in order to process the plurality of sets of data, comprising: a first processor for processing the plurality of sets of data; and a second processor, which connects with said first processor via a communication medium, for processing the plurality of sets of data; wherein said first processor comprises: afirst storingunit; aprocessingperformance monitoring unit for generating first signals representing a processing performance value of said first processor, a first receiving unit connecting with said second processor through the communication medium and receiving second signals representing a process ing performance value of said second processor, said first receiving unit connecting with said monitoring unit and receiving said signals; a distributed processing performance evaluation unit connecting with said receiving unit and receiving said first and second signals; a distribution rate determination unit connecting with said distributed processing performance evaluation unit and receiving an output signal thereof; a first conversion unit connecting with said first storing unit and receiving the data therefrom, said first conversion unit connecting with said distribution rate determination unit and receiving an output signal thereof; and a first transmitting unit connecting with said distribution rate determination unit and receiving an output signal thereof, said first transmitting unit further connecting with said first conversion unit, and said first storing unit, and said first transmitting unit connecting with said second processor via the communication medium, and said secondprocessor comprises a second receiving unit connecting with the communication medium; a second conversion unit which connects with said second receiving unit and processing data output by said first processor received through said second receiving unit; and a second transmitting unit connecting with said second conversion unit and the communication medium.

According to the sixth aspect of the present invention, there is provided a method for transmitting a program for determining processing performed by a plurality of processors, which performs a processing to a plurality of sets of data, in order to process the plurality of sets of data. The method includes steps of : coding the program including : a processing performance evaluation module for evaluating processing performance value of each of the plurality of processors when the processing is generated; and a distribution rate determination module for determining a distribution rate of a processing load of each of the plurality of processors for processing the plurality of sets of data based on the results of evaluation by the processing performance evaluation module; storing the program coded in the program coding step to a computer readable medium; and transmitting the program to an electronic apparatus via a communication medium.

The summary of the invention does not necessarily describe all necessary features of the present invention. The present invention may also be a sub-combination of the features described above.

### BRIEF DESCRIPTION OF THE DRAWINGS

Fig. 1 is a schematic illustration exemplary showing a configuration of a distributed processing system according to an embodiment of the present invention.
Fig. 2 is a block diagram of exemplary showing a schematic configuration of a first processor.
Fig. 3 depicts a hardware configuration of the first processor.
Fig. 4 is an example of a flow chart of the distributed processing system described with reference to Fig. 1.
Fig. 5 is an example of a detailed flow chart of a step of determining a distribution rate of a processing load in the distributed processing system described with reference to Fig.4.
Fig. 6 is an example of a detailed flow chart of a step of determining that a processor other than a first processor is to be used for image processing, described with reference to Fig.5.
Fig. 7 is a schematic illustration of another example of a configuration of a distributed processing system described with reference to Fig. 1.
Fig. 8 is a schematic illustration of still another example of a configuration of a distributed processing system.
Fig. 9 is an example of a flow chart of the distributed processing system described with reference to Fig. 8.
Fig. 10 is an example of a detailed flow chart of a step of determining distribution rate of the processing load in the distributed processing system described with reference to Fig. 9.
Fig. 11 is an example of a detailed flow chart of a step of determining that a processor other than a first processor is to be used for image processing, described with reference to Fig . 10 .

### DETAILED DESCRIPTION OF THE INVENTION

The invention will now be described based on the preferred embodiments, which do not intend to limit the scope of the present invention, but exemplify the invention. All of the features and the combinations thereof described in the embodiment are not necessarily essential to the invention.

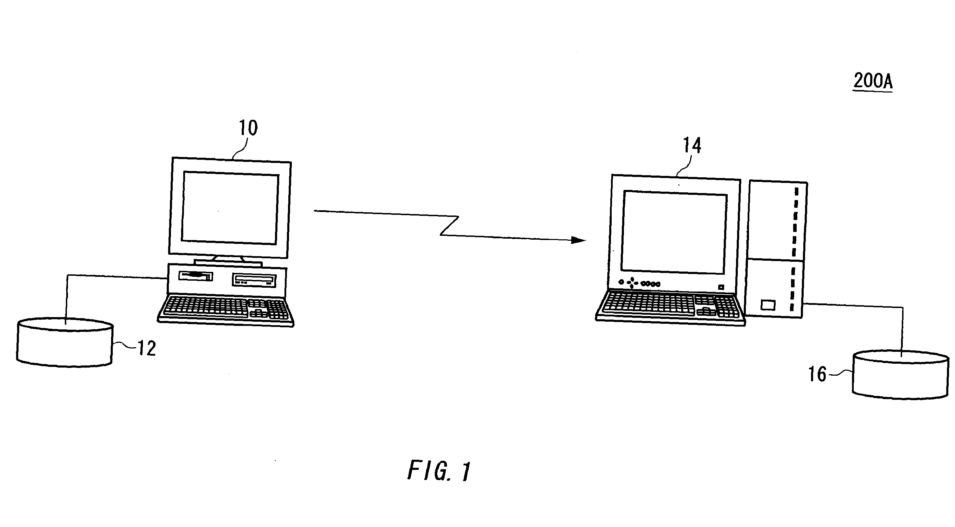

Fig. 1 is a schematic illustration exemplary showing a configuration of a distributed processing system 200A according to an embodiment of the present invention. The distributed processing system 200A includes a first processor 10 and a second processor 14 which perform a processing to specific data. The distributed processing system 200A distributes a plurality of sets of data to the first processor 10 and the second processor 14 and processes the data. Data to be processed includes at least one of image data and sound data. Each of the first processor 10 and the second processor 14 may be an electronic apparatus, such as a computer, a personal digital assistant (PDA), a digital television, or a set top box (STB). The first processor 10 and the second processor 14 are electronically connected mutually.

In the embodiment described in Fig. 1, the first processor 10 transmits the image data stored in a first storing unit 12 to the second processor 14, and the second processor 14 displays the image data transmitted from the first processor 10.

The first processor 10 includes the first storing unit 12 for storing a plurality of image data. The image stored in the first storing unit 12 includes characteristics of the image at the time for the image being generated, as an image characteristic profile. For example, an image captured with a digital camera or a scanner includes characteristics of the device which captured the image as the image characteristic profile. Moreover, the image generated by a computer includes the image characteristic profile indicating characteristics of a displaying apparatus of the computer.

Furthermore, the first storing unit 12 stores an "image processing performance value" of the first processor 10, where the "image processing performance value" is a value which indicates a performance for processing the image data per unit of time. For example the processor performs image processing, such as processing of subtracting color of the image, processing of converting color of the image, processing of converting resolution of the image, processing of compressing or reducing data size of the image, and/or processing of converting size of the image in accordance with characteristics of the displaying apparatus of the second processor 14.

The second processor 14 includes a second storing unit 16. The second storing unit 16 stores a profile of characteristics of the displaying apparatus of the second processor 14 as an image display performance of the second processor 14 . Furthermore, the second storing unit 16 stores the image processing performance value of the second processor 14.

In Fig. 1, one of the first processor 10 and the second processor 14 acts as the distributed processing control apparatus. The distributed processing control apparatus determines processing performed by a plurality of processors, which performs a processing to a plurality of sets of data, in order to process the plurality of sets of data. For example, as the distributed processing control apparatus, one of the first processor 10 and the second processor 14 determines distribution rate of processing load of the first processor 10 for processing the plurality of image data and that of the second processor 14.

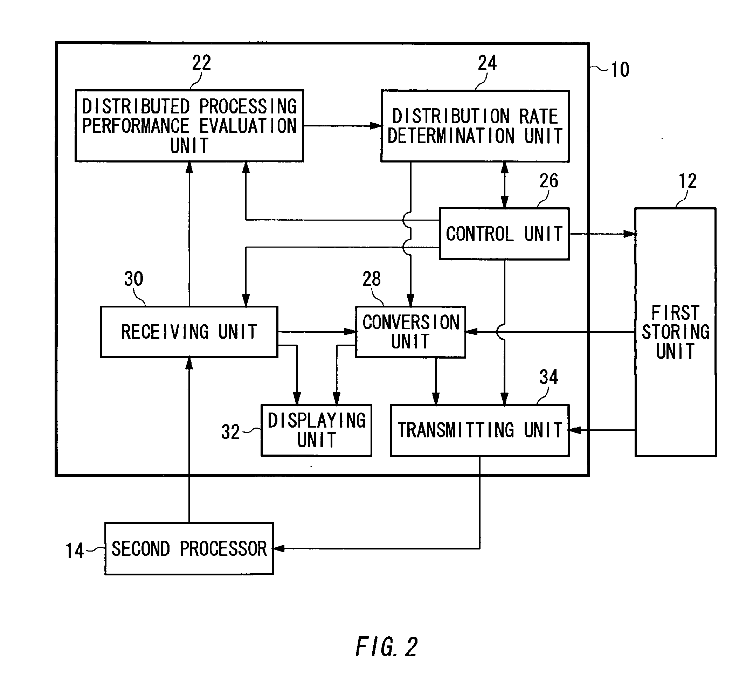

Fig. 2 is a block diagram exemplary showing a schematic configuration of the first processor 10. In this example, the first processor 10 also acts as the distributed processing control apparatus. The first processor 10 includes /a distributed processing performance evaluation unit 22, a distribution rate determination unit 24, a control unit 26, a conversion unit 28, a receiving unit 30, a displaying unit 32, and a transmitting unit 34.

The receiving unit 30 receives the image processing performance value of the second processor 14, and communication performance value between the first processor 10 and the second processor 14, from the second processor 14. The processing performance evaluation unit 22 acquires the image processing performance value of each of the first processor 10 and the second processor 14, and the image displaying performance of the second processor 14, from the receiving unit 30, and evaluates them.

For example, the processing performance evaluation unit 22 acquires an image processing performance value and a CPU load factor at that moment in time from each of the first processor 10 and the second processor 14. As explained above with reference to Fig. 1, since the image processing performance value of the second processor 14 is stored in the second storing unit 16, the processing performance evaluation unit 22 acquires the image processing performance value stored in the second storing unit 16 from the second processor 14.

Similarly, the processing performance evaluation unit 22 acquires the image processing performance value of the first processor 10 stored in the first storing unit 12. The processing performance evaluation unit 22 may acquire the CPU load factor of the first processor 10 and the second processor 14 from the control program executed by the first processor 10 and the second processor 14.

Furthermore, the processing performance evaluation unit 22 evaluates the communication performance value between the first processor 10 and the second processor 14. The processing performance evaluation unit 22 evaluates the communication performance value between the first processor 10 and the second processor 14 when acquiring the image processing performance value, the load factor of the CPU at that moment in time, and the data of the image display performance, from the second processor 14. For example, by measuring a transfer time for data, such as the image processing performance value, from the second processor 14 to the first processor 10, the communication performance value between the processors is calculated from size of the transferred data and the transfer time for the data.

The distribution rate determination unit 24 determines the distribution rate of processing load of each of the first processor 10 and the second processor 14 for processing a plurality of image data based on the results of the evaluation by the processing performance evaluation unit 22. For example, the distribution rate determination unit 24 computes the processing performance value of the first processor 10 and the second processor 14 at that moment in time, and determines to process the image by the processor having higher processing performance value based on the results of the evaluation by the processing performance evaluation unit 22. The distribution rate determination unit 24 may determine the distribution rate not only using the processing performance value of each of the processor but also using the communication performance value between the processors evaluated by the processing performance evaluation unit 22.

For example, when a sum of time for processing an image in the first processor 10 and time for transferring the processed image from the first processor 10 to the second processor 14, is shorter than that of transferring the unprocessed image from the first processor 10 to the second processor 14 and the time for processing the image in the second processor 14, the distribution rate determination unit 24 determines to process the image in the first processor 10 . In this case, the first processor 10 processes the image and transmits the processed image to the second processor 14, and the second processor 14 displays the image processed by the first processor 10.

On the other hand, when the sum of time for processing the image in the first processor 10 and time for transferring the processed image from the first processor 10 to the second processor 14 is longer than the sum of time for transferring the unprocessed image from the first processor 10 to the second processor 14 and the time for processing the image in the second processor 14, the distribution rate determination unit 24 determines to process the image in the second processor 14 . In this case, the first processor 10 transmits the unprocessed image to the second processor 14, and the second processor 14 processes the unprocessed image and displays it.

The distribution rate determination unit 24 may recognize data size of the plurality of processed image data, and may determine the distribution rate based on the size of the processed data. For example, the distribution rate determination unit 24 recognizes the data size of the plurality of processed image data from the image display performance of the second processor 14 which displays the image. Furthermore, the distribution rate determination unit 24 computes how much the data size is to be compressed or reduced and how much the processing performance value is required for the compression or the reduction, in order to adjust the data size of the processed image to the data size recognized by the distribution rate determination unit 24. The distribution rate determination unit 24 measures the computed required processing performance value and the image processing performance value of the first processor 10 and the second processor 14 at that moment in time, and determines to process the image by the processor having higher processing performance value.

The distribution rate determination unit 24 may include a history of the processing. In this case, the distribution rate determination unit 24 computes a time zone in which the processing load of the first processor 10 is expected to be higher than a predetermined value, by using statistics of the history of the processing. In this time zone, there is a possibility that overall image processing time is shortened when the image is processed in the second processor 14 rather than it is processed in the first processor 10. Therefore, the first processor 10 determines the distribution rate so that the processing load of the first processor 10 becomes low in this time zone.

The transmitting unit 34 transmits the image stored in the first storing unit 12 to the second processor 14. Alternatively, in a case where the image is processed in the second processor 14 and when the second processor 14 does not include a program for processing the image, the transmitting unit 34 transmits the program for processing the image to the second processor 14. In this case, the distribution rate determination unit 24 determines the distribution rate, further based on the communication load for transmitting the program.

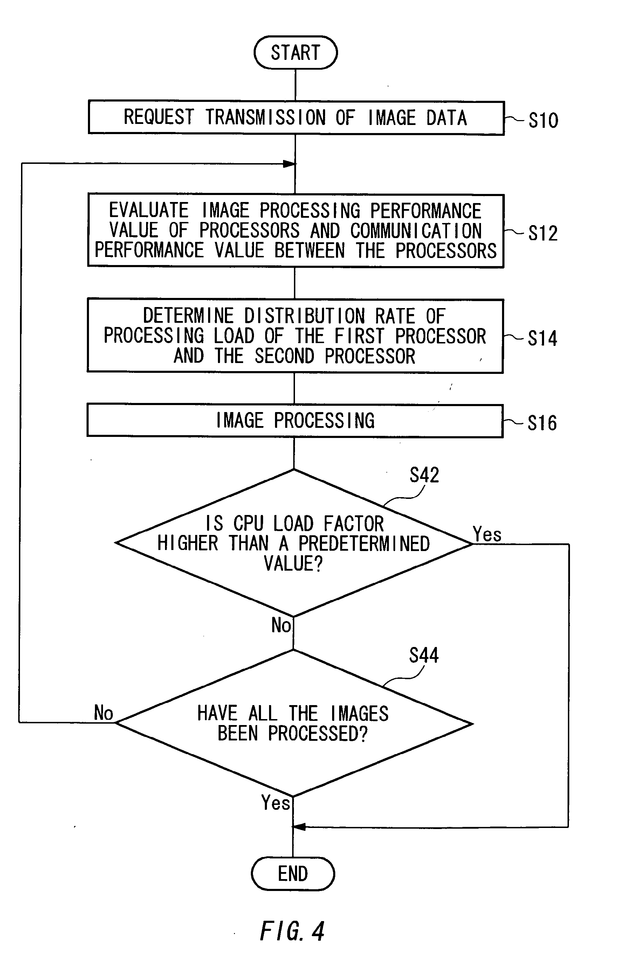

The conversion unit 28 converts the image so that the image is displayed by the second processor 14. The conversion unit 28 converts the image when the distribution rate determination unit 24 determines that the image is to be processed by the first processor 10. The displaying unit 32 displays the image when the first processor 10 receives and displays the image from the second processor, as shown in Fig. 4. The control unit 26 controls the receiving unit 30, the processing performance evaluation unit 22, the distribution rate determination unit 24, the conversion unit 28, the displaying unit 32, the first storing unit 12, and the transmitting unit 34.

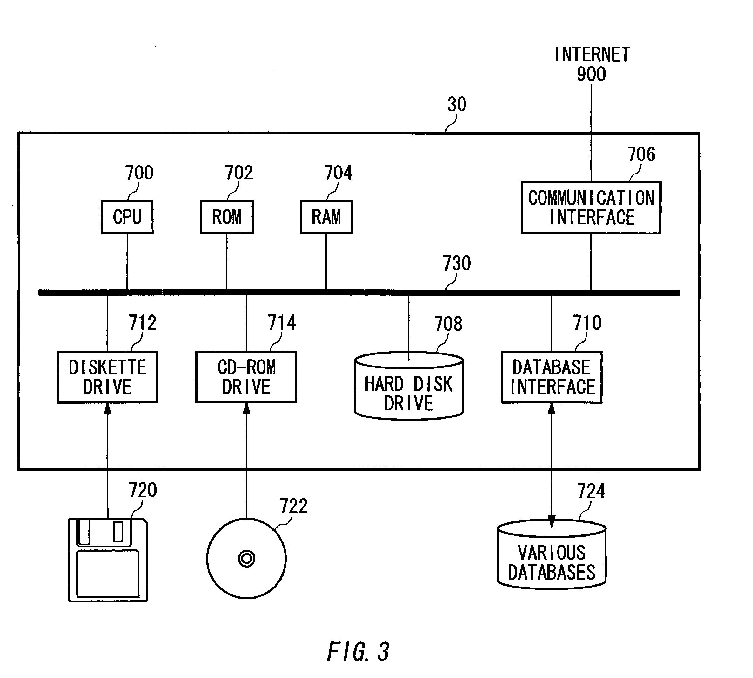

Fig. 3 depicts a hardware configuration of the first processor 10. The first processor 10 includes CPU 700, ROM 702, RAM 704, a communication interface 706, hard disk drive 708, a database interface 710, diskette drive 712, and CD-ROM drive 714, all of which are connected to a bus 730. The CPU 700 operates based on the program stored in the ROM 702 and the RAM 704. The communication interface 706 communicates with outside through the Internet 900. The database interface 710 writes data in various databases 724, and updates the contents of the databases. The hard disk drive 708, as an example of a storing device, stores setting information and the program executed by the CPU 700.

The diskette drive 712 reads data or a program in the diskette 720, and provides it to the CPU 700. The CD-ROM drive 714 reads data or a program in the CD-ROM 722, and provides it to the CPU 700. The communication interface 706 transmits and receives data through the Internet 900. The database interface 710 connects with the various databases 724, and transmits and receives data to/from the databases 724.

The program, which is executed by the CPU 700, is stored in a record medium such as the diskette 720 or the CD-ROM 722 and provided to a user. The program stored in the record medium may be either compressed or decompressed. The program executed by the CPU 700 is installed from the record medium to the hard disk drive 708, read by the RAM 704, and executed by the CPU 700.

As a functional configuration, the program which is stored in the record medium, i.e., the program installed in the hard disk drive 708, includes a processing performance evaluation module for evaluating processing performance value of each of the plurality of processors when the process is generated, and a distribution rate determination module for determining the distribution rate of the processing load of each of the plurality of processors for processing a plurality of sets of data based on the results of the evaluation by the processing performance evaluation module. Since the function of the modules, by which the computer is manipulated, is the same as function and operation of the corresponding component in the first processor 10, i.e., the distributed processing control apparatus according to the present invention, explanation of the function of the modules is omitted.

Apart or all functions of the operation of the first processor 10 in all the embodiments explained in this patent application are storable in the diskette 720 or the CD-ROM 722, which are examples of the record media depicted in Fig. 3.

These programs may be read by the RAM from the record medium and be executed directly, or may be executed after the programs are installed in the RAM. The programs may be stored either on a single record medium or a plurality of record media. The programs may be stored in an encoded form.

It is possible to use an optical record medium such as DVD or PD, a magneto-optical record medium such as Minidisk, a tape medium, a magnetic record medium or a semiconductor memory such as an IC card or a Miniature Card as a record medium instead of the diskette or the CD-ROM. A storage device, such as a hard disk or RAM in a server system on a dedicated communication network or the Internet, may be used as a record medium and the program may be provided to the first processor 10 via the communication network.

Fig. 4 is an example of a flow chart of the distributed processing system 200A described with reference to Fig. 1. First, the first processor 10 or the second processor 14 requests the transmission of the image data (S10). Next, the processing performance evaluation unit 22 evaluates the image processing performance value and the load factor of the CPU of each of the first processor 10 and the second processor 14 at that moment in time, and the communication performance value between the first processor 10 and the second processor 14 (S12).

The distribution rate determination unit 24 determines the distribution rate of the processing load of each of the first processor 10 and the second processor 14 for processing the plurality of image data based on the results of the evaluation by the processing performance evaluation unit 22 (S14). For example, based on the results of the evaluation by the processing performance evaluation unit 22, the distribution rate determination unit 24 computes the processing performance value of the first processor 10 and the second processor 14 at that moment in time, and determines that the processor having higher processing performance value is to process the image data in accordance with the image display performance of the second processor 14.

If it is judged that the processing performance value of the first processor 10 is higher than that of the second processor 14, the distribution rate for the first processor 10 is determined to be 100%, and that of the second processor 14 is determined to be 0%. Furthermore, the distribution rate determination unit 24 may compute the processing performance values of the first processor 10 and the second processor 14 including the communication performance value of the first processor 10 and the second processor 14 at that moment in time.

Next, the first processor 10 and the second processor 14 performs image processing at the distribution rate determined by the distribution rate determination unit (S16).

The control unit 26 judges whether the CPU load factor of each of the first processor 10 and the second processor 14 is higher than a predetermined value, e.g., 90%, (S42). If the CPU load factor of each of the first processor 10 and the second processor 14 is higher than the predetermined value (S42, Yes), since an overhead for load balancing to the first processor 10 and the second processor 14, i.e., time to spend on processing which does not participate in the processing of the user's task in the system, becomes large, the control unit 26 interrupts the image processing being processed, and resumes the processing of a new image after the CPU load factor of each of the processors becomes lower than the predetermined value.

For example, the control unit 26 measures the CPU load factor of each of the processors 10 and 14, and when the CPU load factor becomes larger than a predetermined value, the control unit 26 instructs to interrupt the processing of the image to each of the processors 10 and 14. The control unit 26 measures continuously the CPU load factor of each of the processors 10 and 14, and when the CPU load factor of each of the processors 10 and 14 becomes lower than the predetermined value, the control unit 26 authorizes to resume reception of a new image to the receiving unit 30.

On the other hand, if the CPU load factor of each of the processors 10 and 14 is lower than the predetermined value (S42, No), the control unit 26 judges whether all the images are processed every time after the processing of one of the images is completed (S44) . If the processing of all the images is not completed (S44, No), the processing performance evaluation unit 22 evaluates once more the processing performance value of each of the first processor 10 and the second processor 14, and the communication performance value between the first processor 10, and the second processor 14 (S12) . The distribution rate determination unit 24 determines once more the distribution rate of the processing load of each of the first processor 10 and the second processor 14 for processing the plurality of image data based on the results of the evaluation by the processing performance evaluation unit 22 (S14).

When processing each of the plurality of images, the processing performance of each of the processors and the communication performance between processors change with passage of time. Therefore, every time after the processing of one of the images is completed (S44), the processing performance evaluation unit 22 evaluates the processing performance value of each of the processors, and the communication performance value between the processors (S12), and the distribution rate determination unit 24 determines the distribution rate of the processing load so as to minimize the processing time for the images by determining the distribution rate of the processing load of each of the processors for processing the plurality of image data (S14).

After all the image processing is completed (S44, Yes), distributed processing system 200A terminates the processing.

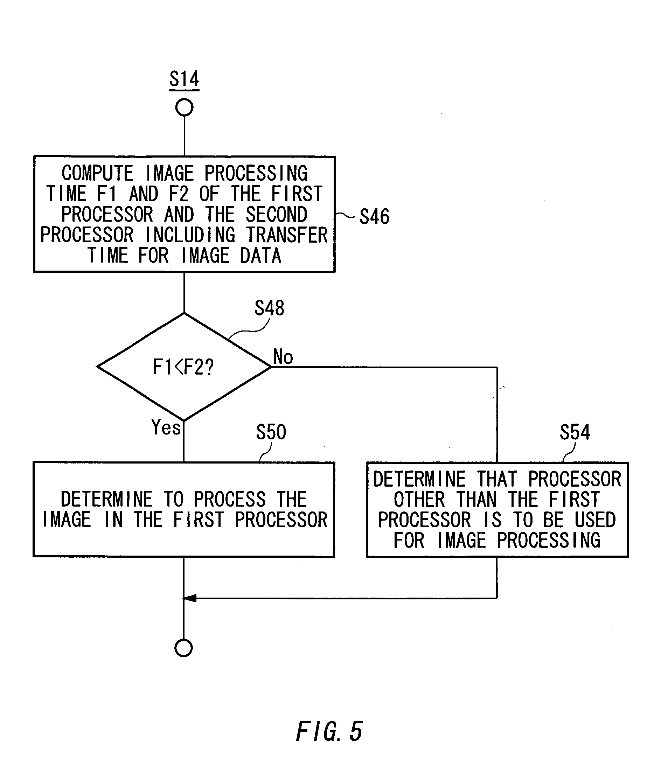

Fig. 5 is an example of a detailed flow chart of a step of determining a distribution rate of the processing load (S14) described with reference to Fig. 4 . First, the distribution rate determination unit 24 computes the time required for the image processing by the first processor 10 and the second processor 14 including the transfer time for the image data based on the results of the evaluation by the processing performance evaluation unit 22 (S46).

Here, the image processing performance value of the first processor 10 is defined as A1, and the CPU load factor of the first processor 10 is defined as B1 The CPU load factor takes a value between 0% and 100%. Furthermore, the image processing performance value of the second processor 14 is defined as A2, and the CPU load factor of the second processor 14 is defined as B2. The communication performance value of a telecommunication circuit between the first processor 10 and the second processor 14, e.g., the transmission performance per unit of time, is defined as D. Furthermore, a file size of the image data stored in the first storing unit 12 in the first processor 10 is defined as E1, and a file size of the image data displayed by the second processor 14 is defined as E2.

In this case, C1 is given by C1=A1 (100-B1) , where C1 is the image processing performance value of the first processor 10. Therefore, a time F1 for processing the image data in the first processor 10 including the transfer time for the image data is given by F1=E2/D+E1/C1.

On the other hand, C2 is given by C2=A2(100-B2), where C2 is the image processing performance value of the second processor 14. Therefore, a time F2 for processing the image data in the second processor 14 including the transfer time for the image data is given by F2=E1/D+E1/C2.

Next, the road rate determination unit 24 judges whether the time F1 for processing the image data in the first processor 10 including the transfer time for the image data, is smaller than the time F2 for processing the image data in the second processor 14 including the transfer time for the image data (S48).

If F1 is smaller than F2 (S48, Yes), the distribution rate determination unit 24 determines to process the image in the first processor 10 and transfer it to the second processor 14 (S50). In this case, in the image processing step (S16) , the conversion unit 28 of the first processor 10 acquires a characteristic profile of the displaying apparatus of the second processor 14 from the second processor 14, and processes the image using the characteristic profile of the second processor 14 and the characteristic profile corresponding to the image file which is to be processed. The transmitting unit 34 transmits the image, which is processed by the conversion unit 28 , to the second processor 14.

On the other hand, if F1 is larger than F2 (S48, No), the distribution rate determination unit 24 determines that the processor other than the first processor 10, i.e., the second processor 14, is to be used for the image processing (S54).

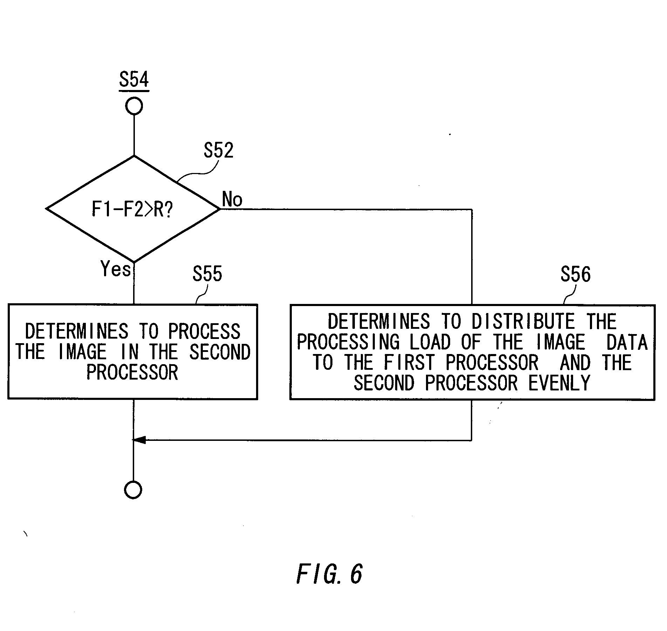

Fig. 6 is an example of a detailed flow chart of a step of determining that the processor other than the first processor 10 is to be used for image processing, described with reference to Fig. 5. First, the distribution rate determination unit 24 judges whether a value of F1 minus F2 is larger than a predetermined value R (S52) .

If the value of F1 minus F2 is larger than the predetermined value R (S52, Yes), the distribution rate determination unit 24 judges that F1 and F2 are not equal, and it determines to transfer the unprocessed image data to the second processor 14 from the first image processor 10, and to process and display the image in the second processor 14 (S55).

In this case, in the image processing step (S16), the transmitting unit 34 of the first processor 10 transmits the unprocessed image file to the second processor 14. Furthermore, the transmitting unit 34 transmits an image characteristic profile corresponding to the transmitted image file. The second processor 14 processes the image file transmitted from the first processor 10 using the characteristic profile of the displaying apparatus of the second processor 14, and the image characteristic profile transmitted from the first processor 10.

On the other hand, if the value of F1 minus F2 is smaller than the predetermined value R (S52, No), the distribution rate determination unit 24 judges that F1 and F2 is substantially equal, and it determines to distribute the processing load of the image data to the first processor 10 and the second processor 14 evenly (S56). For example, the first processor 10 processes the half of the image data of one image, transfers the half-processed image to the second processor 14 and processes the remaining half of the image data in the second processor 14.

As mentioned above, the method of determining the distribution rate of the processing load of each of the first processor 10 and the second processor 14 has been explained taking the communication performance between the first processor 10 and the second processor 14 into consideration. However, the first processor 10 may determine the distribution rate of the processing load, without taking the communication performance between the first processor 10 and the second processor 14 into consideration. For example, instead of F1 and F2, the distribution rate determination unit 24 computes the processing performance value C1 of the first processor 10, and the processing performance value C2 of the second processor 14, and determines whether to choose the first processor 10 or the second processor 14 for processing the image according to size of C1 and C2.

In this way, in the distributed processing system 200A, every time after the processing of one of the images is completed, the processing performance evaluation unit 22 evaluates the processing performance value of each of the processor and the communication performance value between processors, and the distribution rate determination unit 24 determines the distribution rate of the processing load of each of the processor for processing a plurality of image data. Therefore, even if the processing performance value of each of the processor, the CPU load factor of each of the processor, and the communication performance value between the processors, change in accordance with passage of time, the distributed processing control apparatus determines the distribution rate of the processing load so that time for processing the images becomes the minimum.

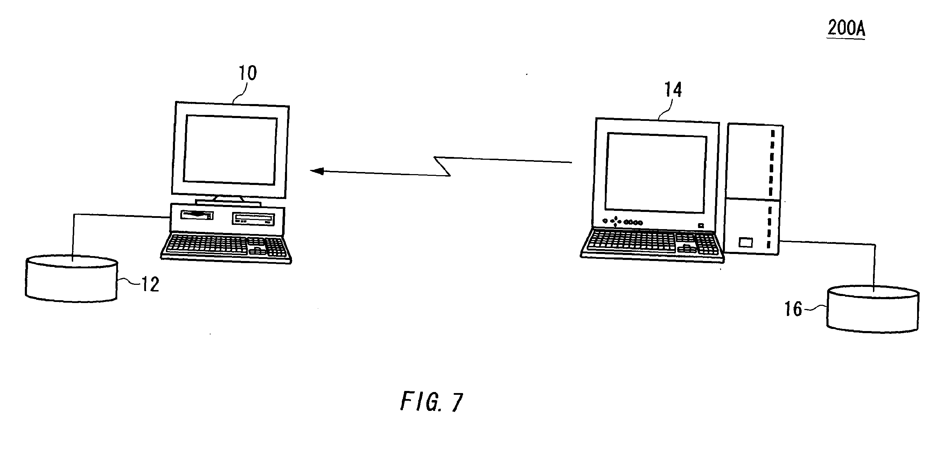

Fig. 7 is a schematic illustration of another example of a configuration of a distributed processing system 200A' described with reference to Fig. 1. In case of Fig. 7, the second processor 14 transfers the image stored in the second storing unit 16 to the first processor 10, and the first processor 10 displays the image transferred from the second processor 14. The explanation of the distributed system 200A' described with reference to Fig.7 is omitted because the configuration of the distributed system 200A' described with reference to Fig. 7 is the same or similar as/to that of the distributed system 200A described in reference to Figs . 1-6, with the exception that the second processor 14 stores the image, and the first processor 10, i.e., the distributed processing control apparatus, displays the image.

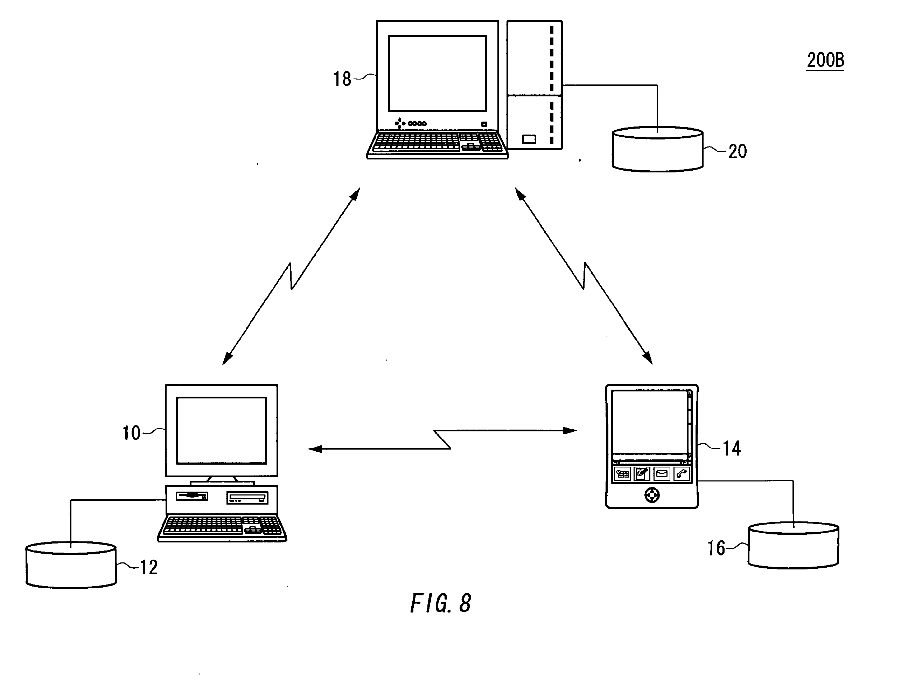

Fig. 8 is a schematic illustration of still another example of a configuration of a distributed processing system 200B. The distributed processing system 200B shown in Fig. 8 includes the same or similar configuration as/to the distributed processing system 200A or 200A' explained in reference to Figs. 1-7 with the exception that it includes a third processor 18. The first processor 10 stores the image and the second processor 14 displays the image stored in the first processor 10. The third processor 18 communicates with at least either of the first processor 10 or the second processor 14. The third processor 18 includes a third storing unit 20. The third storing unit 20 stores the image processing performance value of the third processor 18. One of the first processor 10, the second processor 14, and the third processor 18 acts as the distributed processing control apparatus.

The processing performance evaluation unit 22 evaluates the processing performance value of each of the first processor 10, the second processor 14, and the third processor 18, and the image display performances of the second processor 14, when the process is generated. The distribution rate determination unit 24 determines whether to choose the first processor 10, the second processor 14, and the third processor 18 for converting the plurality of image data in accordance with the image display performance of the second processor 14 based on the results of the evaluation by the processing performance evaluation unit 22. The explanation of the distributed system 200B described with reference to Fig. 8 is omitted because the configuration of the distributed system 200B is the same or similar as/to that of the distributed system 200A described in reference to Figs. 1-6, with the exception that the distributed system 200B determines the distribution rate of the processing load with the processing performance value of the third processor 18 and the communication performance value between the third processor 18 and the other processors 10 and 14.

By determining the distribution rate of the processing load including the third processor 18, the image is processed by the third processor when the processing performance value of the third processor 18 is larger than that of the first processor 10 and the second processor 14. Therefore, the processing time for the image is shortened. The third processor 18 is not necessary to be constructed of one processor, but it may include a plurality of processors. If the capacity of the telecommunication circuit which connects each of the processors is high, the processing time for the image is further shortened by distributing the image files to the plurality of processors and processing the image in the plurality of processors.

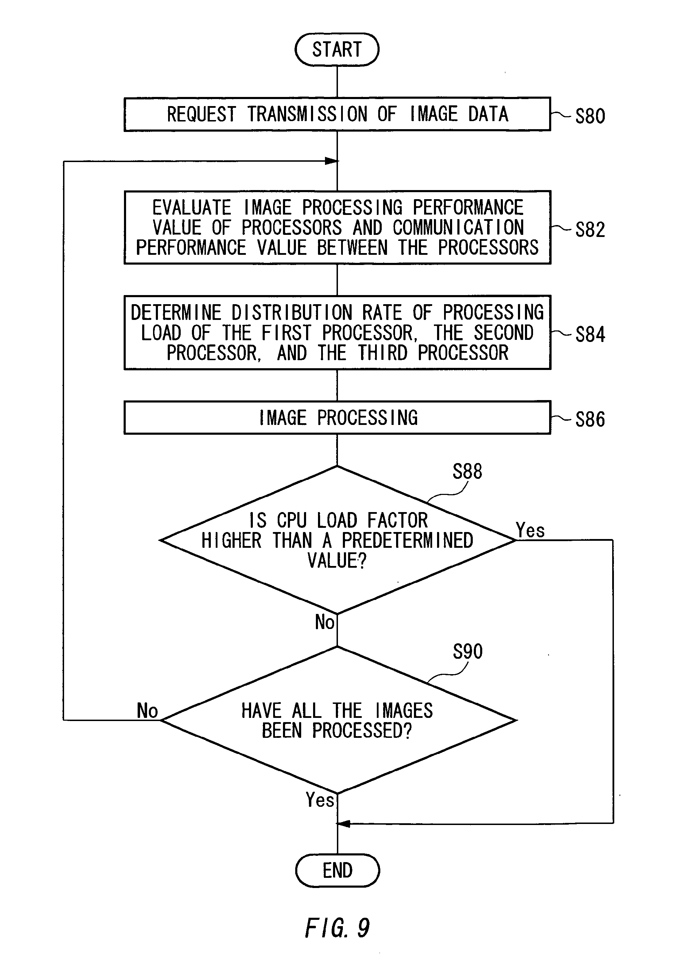

Fig. 9 is an example of a flow chart of the distributed processing system 200B described with reference to Fig. 8. First, the first processor 10 or the second processor 14 requests transmission of the image data (S80). Next, the processing performance evaluation unit 22 evaluates the image processing performance value and the CPU load factor of each of the first processor 10, the second processor 14, and the third processor 18 at that moment in time, and the communication performance value between the first processor 10, the second processor 14, and the third processor 18 (S82).

The distribution rate determination unit 24 determines the distribution rate of the processing load of the first processor 10, the second processor 14, and the third processor 18 for processing the plurality of image data based on the results of the evaluation by the processing performance evaluation unit 22 (S84). For example, based on the results of the evaluation by the processing performance evaluation unit 22, the distribution rate determination unit 24 computes the processing performance values of the first processor 10, the second processor 14, and the third processor 18 at that moment in time, and determines that the image data is processed in accordance with the image display performance of the first processor 10 by the processor having higher processing performance.

If the processing performance value of the first processor 10 is judged to be higher than that of the second processor 14 and the third processor 18, the distribution rate of the first processor 10 becomes 100% and the distribution rate of the second processor 14 and the third processor 18 becomes 0%. Alternatively, the distribution rate determination unit 24 may compute the processing performance values of the first processor 10, the second processor 14, and the third processor 18 including the communication performance value between the first processor 10, the second processor 14, and the third processor 18 at that moment in time.

Next, the first processor 10, the second processor 14, and the third processor 18 perform image processing at the distribution rate determined by the distribution rate determination unit 24 (S86) .

The control unit 26 judges whether the CPU load factor of each of the first processor 10, the second processor 14, and the third processor 18, is higher than a predetermined value, e.g., 90% (S88) . If the CPU load factor of each of the processors 10, 14 and 18 is higher than the predetermined value (S88, Yes), since an overhead for load balancing to the first processor 10, the second processor 14, and the third processor 18, i.e., time to spend on processing which does not participate in the processing of the user's task in the system, becomes large, the control unit 26 interrupts the image processing being processed, and resumes the processing of a new image after the CPU load factor of each of the processors becomes lower than the predetermined value.

On the other hand, if the CPU load factor of each of the processors 10, 14 and 18 is lower than the predetermined value (S88, No), the control unit 26 judges whether all the images are processed every time after the processing of one of the images is completed (S90). If the processing of all the images is not completed (S90, No), the processing performance evaluation unit 22 evaluates once more the processing performance value of each of the first processor 10, the second processor 14 and the third processor 18, and the communication performance value between the first processor 10, the second processor 14 and the third processor 18 (S82) . The distribution rate determination unit 24 determines once more the distribution rate of the processing load of each of the first processor 10, the second processor 14 and the third processor 18 for processing the plurality of image data based on the results of the evaluation by the processing performance evaluation unit 22 (S84).

When processing the plurality of images, the processing performance value of each of the processors and the communication performance value between processors change with passage of time. Therefore, every time after the processing of one of the images is completed (S90), the processing performance evaluation unit 22 evaluates the processing performance value of each of the processors and the communication performance value between the processors (S82), and a distribution rate determination unit 24 determines the distribution rate of the processing load so as to minimize the processing time for the images by determining the distribution rate of the processing load of each of the processors for processing the plurality of image data (S84).

After all the image processing is completed (S90, Yes), distributed processing system 200B terminates the processing.

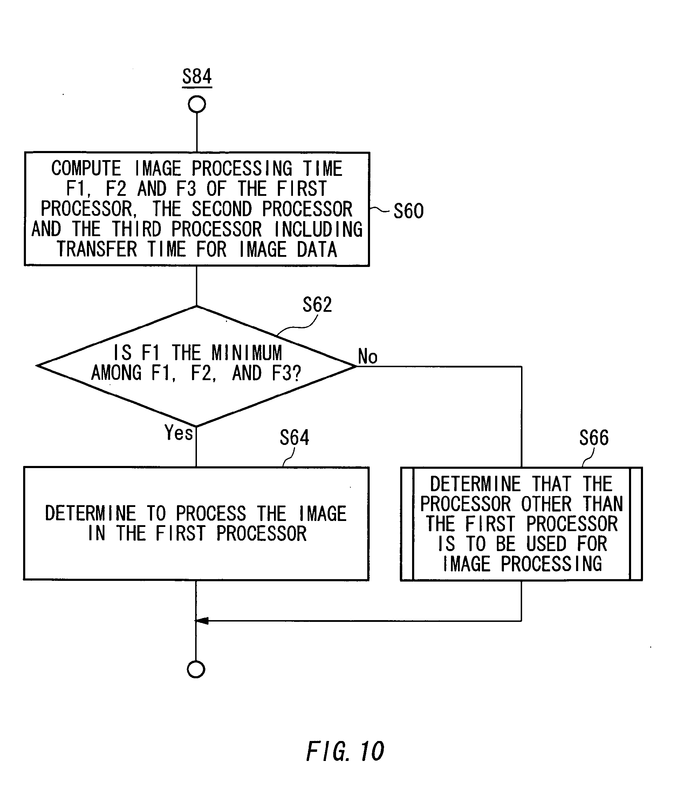

Fig. 10 is an example of a detailed flow chart of a step of determining distribution rate of the processing load (S84) described with reference to Fig. 9. First, a distribution rate determination unit 24 computes the time required for the image processing by the first processor 10, the second processor 14 and the third processor 18 including the transfer time for the image data based on the results of the evaluation by the processing performance evaluation unit 22 (S60).

Here, the image processing performance value of the first processor 10 is defined as A1, and the CPU load factor of the first processor 10 is defined as B1 Furthermore, the image processing performance value of the second processor 14 is defined as A2, and the CPU load factor of the second processor 14 is defined as B2. Furthermore, the image processing performance value of the third processor 18 is defined as A3, and the CPU load factor of the third processor 18 is defined as B3.

The communication performance value of a telecommunication circuit between the first processor 10 and the second processor 14, e.g., a transmission performance per unit of time, is defined as D12. The communication performance value of a telecommunication circuit between the first processor 10 and the third processor 18 is defined as D13. The communication performance value of a telecommunication circuit between the second processor 14 and the third processor 18 is defined as D23 . However, D12 is set to 0 in a case that the first processor 10 and the second processor 14 does not communicate directly since the first processor 10 and the third processor 18 are connected by the Internet, and the second processor 14 and the third processor 18 are connected by a local network for example.

Furthermore, a file size of the image data stored in the first storing unit 12 in the first processor 10 is defined as E1, and a file size of the image data displayed by the second processor 14 is defined as E2.

In this case, C1 is given by C1=A1 (100-B1) , where C1 is the image processing performance value of the first processor 10. Therefore, a time F1 for processing the image data in the first processor 10 including the transfer time for the image data is given by F1=E1/ (A1 (100-B1) ) +E2/D12 when D12 is not zero, or given by F1=E1/ (A1(100-B1))+E2/D13+E2/D23 when D12 is zero.

That is, when D12 is not zero, F1 is a sum of the time for processing the image in the first processor 10 and the time for transmitting the processed image to the second processor 14 . When D12 is zero, F1 is a sum of the time for processing the image in the first processor 10, the time for transmitting the processed image to the third processor 18, and the time for transferring the processed image from the third processor 18 to the second processor 14.

On the other hand, C2 is given by C2=A2(100-B2), where C2 is the image processing performance value of the second processor 14. Therefore, a time F2 for processing the image data in the second processor 14 including the transfer time for the image data is given by F2=E1/D12+E1/(A2(100-B2)) when D12 is not zero, or given by F2=E1/D13+E1/D23+E1/(A2(100-B2)) when D12 is zero.

That is, when D12 is not zero, F2 is a sum of the time for receiving the unprocessed image from the first processor 10, and the time for processing the unprocessed image in the second processor 14. When D12 is zero, F2 is a sum of the time for transferring the unprocessed image from the first processor 10 to the third processor 18, the time for receiving the unprocessed image from the third processor 18, and the time for processing the unprocessed image in the second processor 14.

Furthermore, C3 is given by C3=A3 (100-B3) , where C3 is the image processing performance value of the third processor 18. Therefore, a time F3 for processing the image data in the third processor 18 including the transfer time for the image data is given by F3=E1/D13+E1/ (A3 (100-B3) ) . That is, F3 is a sum of the time for receiving the unprocessed image from the first processor 10, the time for processing the image in the third processor 18, and the time for transmitting the image processed in the third processor 18 to the second processor 14.

Next, the distribution rate determination unit 24 judges whether F1 is the minimum value among F1, F2, and F3 (S62). If F1 is the minimum value (S62, Yes), a distribution rate determination unit 24 determines to process the image in the first processor 10, and transmits it to the second processor 14 (S64) . In this case, in the image processing step (S16) , the conversion unit 28 of the first processor 10 acquires the characteristic profile of the displaying apparatus of the second processor 14 from the second processor 14, and processes the image using the characteristic profile of the displaying apparatus of the second processor 14 and the characteristic profile corresponding to the image file which is to be processed. The transmitting unit 34 transmits the image, which is processed by the conversion unit 28, to the second processor 14. If the first processor 10 and the second processor 14 do not communicate with one another, i.e., if D12=0, the processed image is transferred to the second processor 14 via the third processor 18.

On the other hand, if F1 is not the minimum among F1, F2, and F3 (S62, No), the distribution rate determination unit 24 determines to process the image using the processors other than the first processor 10, i.e., the second processor 14, and the third processor 18 (S66).

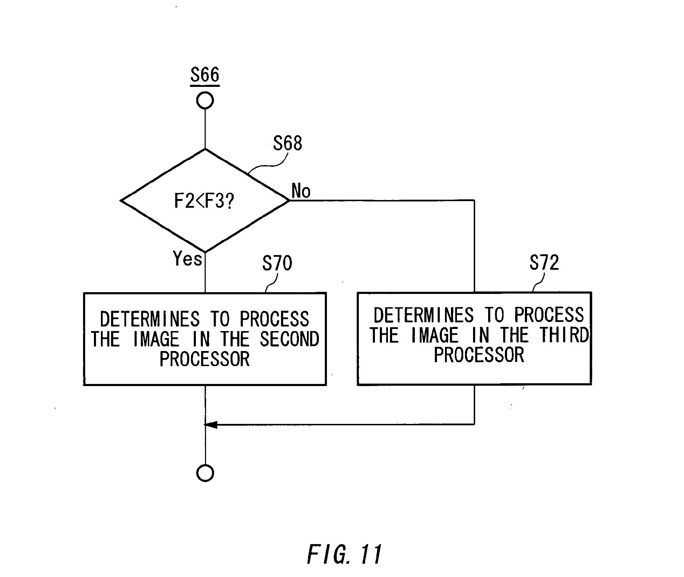

Fig. 11 is an example of a detailed flow chart of a step of determining that a processor other than the first processor 10 is to be used for image processing (S66) , described with reference to Fig. 10. First, the road rate determination unit 24 judges whether F2 is smaller than F3 (S68).

If F2 is smaller than F3 (S68, Yes), the distribution rate determination unit 24 determines to transfers the unprocessed image from the first processor 10 to the second processor 14, process the image in the second processor 14 and displays the image by the second processor 14 (S70) . If the first processor 10 and the second processor do not communicate with one another, i.e., if D12=0, the unprocessed image is transferred to the second processor 14 via the third processor 18.

In this case, in the image processing step (S86), the transmitting unit 34 of the first processor 10 transmits the unprocessed image file to the second processor 14. Furthermore, the transmitting unit 34 transmits the image characteristicprofile corresponding to the transmitted image file. The second processor 14 processes the image file transmitted from the first processor 10 using the characteristic profile of the displaying apparatus of the second processor 14 and the image characteristic profile transmitted from the first processor.

On the other hand, if F2 is larger than F3 (S68, No), the distribution rate determination unit 24 determines to transfer the unprocessed image data to the third processor 18 from the first processor 10, and to process the image in the third processor 18 (S72) . The image processed in the third processor is transferred to the second processor 14.

In this way, in the distributed processing system 200B, every time after the processing of one of the images is completed, the processing performance evaluation unit 22 evaluates the processing performance value of each of the processor and the communication performance value between processors, and the distribution rate determination unit 24 determines the distribution rate of the processing load of each of the processor for processing the plurality of image data. Therefore, even if the processing performance value of each of the processor, the CPU load factor of each of the processor, and the communication performance value between the processors, change in accordance with passage of time, the distributed processing control apparatus determines the distribution rate of the processing load so that time for processing the images becomes the minimum.

As described above, according to the present invention, the time for the image processing including the transfer time for the image between the plurality of processors is shortened.

Although the present invention has been described by way of an exemplary embodiment, it should be understood that those skilled in the art might make many changes and substitutions without departing from the spirit and the scope of the present invention which is defined only by the appended claims.

## Claims

1. A distributed processing control apparatus for determining processing performed by a plurality of processors, which performs a processing to a plurality of sets of data, in order to process the plurality of sets of data, **CHARACTERIZED IN THAT** the control apparatus comprises:
a processing performance evaluation unit for evaluating processing performance value of each of the plurality of processors when the processing is generated; and
a distribution rate determination unit for determining a distribution rate of a processing load of each of the plurality of processors for processing the plurality of sets of data based on the results of evaluation by said processing performance evaluation unit.

2. The distributed processing control apparatus as claimed in claim 1, **CHARACTERIZED IN THAT** one of the plurality of processors comprises the distributed processing control apparatus.

3. The distributed processing control apparatus as claimed in claim 1, **CHARACTERIZED IN THAT** the plurality of sets of data is a plurality of image data.

4. The distributed processing control apparatus as claimed in claim 2, **CHARACTERIZED IN THAT**:
the plurality of processors comprises a first processor for storing a plurality of image data as the plurality of sets of data and a second processor for displaying the plurality of image data;
said processing performance evaluation unit evaluates processing performance value of said first processor and said second processor, and image display performance of said second processor when the processing is generated; and
said distribution rate determination unit determines the distribution rate of the processing load of each of said first processor and said second processor for processing the plurality of image data based on the results of the evaluation by said processing performance evaluation unit.

5. The distributed processing control apparatus as claimed in claim 4, **CHARACTERIZED IN THAT** said processing performance evaluation unit performs the evaluation when said first processor transmits the image data.

6. The distributed processing control apparatus as claimed in claim 4, **CHARACTERIZED IN THAT** said processing performance evaluation unit performs the evaluation when said second processor requests the image data.

7. The distributed processing control apparatus as claimed in claim4, **CHARACTERIZED IN THAT** said distribution rate determination unit determines whether to choose said first processor or said second processor for processing the image data in accordance with the image display performance of said second processor based on the result of the evaluation.

8. The distributed processing control apparatus as claimed in claim 4, **CHARACTERIZED IN THAT**:
the plurality of processors comprises a third processor for communicating with at least one of said first processor and said second processor;
said processing performance evaluation unit evaluates the processing performance value of each of the plurality of processors including said third processor, and the image display performances of said second processor when the processing is generated; and
said distribution rate determination unit determines whether to choose said first processor, said second processor, or said third processor for processing the image data in accordance with the image display performance of said second processor based on the result of the evaluation.

9. The distributed processing control apparatus as claimed in claim 1, **CHARACTERIZED IN THAT** said distribution rate determination unit comprises a history of processing, and computes a time zone in which processing load of said first processor is expected to be higher than a predetermined value, by using statistics of the history of the processing.

10. The distributed processing control apparatus as claimed in claim 1, **CHARACTERIZED IN THAT** said processing performance evaluation unit evaluates communication performance value between the plurality of processors, and said distribution rate determination unit determines the distribution rate in accordance with the communication performance value.

11. The distributed processing control apparatus as claimed in claim 10, **CHARACTERIZED IN THAT** said distribution rate determination unit recognizes data size of the plurality of processed data, and determines the distribution rate based on the size of the processed data.

12. The distributed processing control apparatus as claimed in claim 1, **CHARACTERIZED IN THAT** the control apparatus further comprises:
a program transmitting unit for transmitting a program for the processing to the processor which performs the processing; and wherein
said distribution rate determination unit determines the distribution rate further based on a communication load for transmitting the program.

13. A distributed processing system for distributing and processing a plurality of sets of data comprising a plurality of processors for performing a processing to the plurality of sets of data; **CHARACTERIZED IN THAT** the system further comprises:
a processing performance evaluation unit for evaluating processing performance value of each of the plurality of processors when the processing is generated; and
a distribution rate determination unit for determining a distribution rate of a processing load of each of the plurality of processors for processing the plurality of sets of data based on the result of evaluation by said processing performance evaluation unit.

14. A computer readable medium storing thereon a program for determining processing performed by a plurality of processors, which performs a processing to a plurality of sets of data, in order to process the plurality of sets of data, **CHARACTERIZED IN THAT** the program comprises:
a processing performance evaluation module for evaluating processing performance value of each of the plurality of processors when the processing is generated; and
a distribution rate determination module for determining a distribution rate of a processing load of each of the plurality of processors for processing the plurality of sets of data based on the results of evaluation by said processing performance evaluation module.

15. A distributed processing control method for determining processing performed by a plurality of processors, which performs a processing to a plurality of sets of data, in order to process the plurality of sets of data, **CHARACTERIZED IN THAT** the control method comprises steps of:
evaluating processing performance value of each of the plurality of processors when the processing is generated; and
determining a distribution rate of a processing load of each of the plurality of processors for processing the plurality of sets of data based on the results of evaluation in said processing performance evaluation step.

16. A distributed processing system for performing a processing on a plurality of sets of data, in order to process the plurality of sets of data, **CHARACTERIZED IN THAT** the system comprises:
a first processor for processing the plurality of sets of data; and
a second processor, which connects with said first processor via a communication medium, for processing the plurality of sets of data;
wherein said first processor comprises:
a first storing unit;
a processing performance monitoring unit for generating first signals representing a processing performance value of said first processor,
a first receiving unit connecting with said second processor through the communication medium and receiving second signals representing a processing performance value of said second processor, said first receiving unit connecting with said monitoring unit and receiving said signals;
a distributed processing performance evaluation unit connecting with said receiving unit and receiving said first and second signals ;
a distribution rate determination unit connecting with said distributed processing performance evaluation unit and receiving an output signal thereof;
a first conversion unit connecting with said first storing unit and receiving the data therefrom, said first conversion unit connecting with said distribution rate determination unit and receiving an output signal thereof; and
a first transmitting unit connecting with said distribution rate determination unit and receiving an output signal thereof, said first transmitting unit further connecting with said first conversion unit, and said first storing unit, and said first transmitting unit connecting with said second processor via the communication medium, and
said second processor comprises:
a second receiving unit connecting with the communication medium;
a second conversion unit which connects with said second receiving unit and processing data output by said first processor received through said second receiving unit; and
a second transmitting unit connecting with said second conversion unit and the communication medium.

17. A method for transmitting a program for determining processing performed by a plurality of processors, which performs a processing to a plurality of sets of data, in order to process the plurality of sets of data, **CHARACTERIZED IN THAT** the method comprises steps of:
coding the program comprising:
a processing performance evaluation module for evaluating processing performance value of each of the plurality of processors when the processing is generated; and
a distribution rate determination module for determining a distribution rate of a processing load of each of the plurality of processors for processing the plurality of sets of data based on the results of evaluation by said processing performance evaluation module;
storing the program coded in said program coding step to a computer readable medium; and
transmitting the program to an electronic apparatus via a communication medium.
